# EUROPÄISCHE PATENTSCHRIFT

(11) **EP 3 822 667 B1**
(45) Veröffentlichungstag und Bekanntmachung des Hinweises auf die Patenterteilung: **08.01.2025**
(21) Anmeldenummer: 20186399.0
(22) Anmeldetag: 17.07.2020
(51) Int. Cl.: G01V 8/20, G01V 8/12, F16P 3/14

(54) **LICHTSCHRANKENANORDNUNG**
LIGHT BARRIER DEVICE
AGENCEMENT DE BARRIÈRES LUMINEUSES

(30) Priorität: 15.11.2019 DE 202019106397 U
(43) Veröffentlichungstag der Anmeldung: 19.05.2021
(73) Patentinhaber: Leuze electronic GmbH + Co. KG, 73277 Owen/Teck (DE)
(72) Erfinder: Feller, Bernhard, 86316 Friedberg (DE); Koperski, Joachim, 85521 Ottobrunn (DE); Aldiek, Norbert, 73230 Kirchheim/Teck (DE); Hörderich, Johann, 82291 Mammendorf (DE); Olbrich, Sebastian, 80992 München (DE)
(74) Vertreter: Ruckh, Rainer Gerhard

(56) Entgegenhaltungen:
- EP-A1- 0 598 630
- EP-A1- 2 584 703
- EP-A1- 3 059 616
- DE-A1- 10 117 838
- DE-A1- 102015 007 354
- DE-A1- 4 423 264

## Beschreibung

Die Erfindung betrifft eine Lichtschrankenanordnung gemäß dem Oberbegriff des Anspruchs 1.

Im einfachsten Fall besteht die Lichtschrankenanordnung aus einer einzelnen Lichtschranke, das heißt die Sendereinheit der Lichtschrankenanordnung weist nur einen Sendelicht emittierenden Sender auf, welchem nur ein Empfänger in der Empfängereinheit der Lichtschrankenanordnung zugeordnet ist.

Generell kann die Lichtschrankenanordnung auch mehrere einzelne Lichtschranken aufweisen. Insbesondere kann die Lichtschrankenanordnung als Lichtvorhang ausgebildet sein, bei welchem in einem ersten Gehäuse der Sendereinheit mehrere Sender integriert sind und in einem zweiten Gehäuse der Empfängereinheit mehrere Empfänger integriert sind.

Generell sind die Sendereinheit und die Empfängereinheit an gegenüberliegenden Rändern eines Überwachungsbereichs angeordnet, innerhalb dessen mit der Lichtschrankenanordnung eine Objektdetektion erfolgt. Vor dem Betrieb der Lichtschrankenanordnung müssen die Sendereinheit und die Empfängereinheit so gegeneinander ausgerichtet werden, dass bei freiem Überwachungsbereich das Sendelicht jedes Senders auf den zugeordneten Empfänger trifft.

Eine Schwierigkeit besteht hierbei darin, dass die Sender im Allgemeinen Sendelicht im Infrarotbereich emittieren, das für das menschliche Auge nicht sichtbar ist.

Um die Sendereinheit und die Empfängereinheit gegeneinander auszurichten ist es bekannt, als Ausrichthilfe einen Laserpointer an der Sendereinheit zu fixieren. Der Laserpointer strahlt einen sichtbaren Laserstrahl ab, der auf die Empfängereinheit geführt ist. Anhand der auf der Empfängereinheit abgebildeten Laserlichtfläche kann die Empfängereinheit relativ zur Sendereinheit, oder umgekehrt, ausgerichtet werden.

Nachteilig hierbei ist, dass der Laserpointer eine zusätzliche Einrichtung darstellt, womit ein zusätzlicher Konstruktions- und Kostenaufwand verbunden ist. Weiterhin ist nachteilig, dass der Laserpointer an der Sendereinheit montiert werden muss, was umständlich und zeitaufwändig ist.

Die DE 10 2015 007 354 A1 betrifft ein Verfahren zur Überwachung der Ausrichtung eines Lichtgitters bestehend aus einer Sendeeinheit, die eine Vielzahl von Lichtstrahlen emittierende Lichtquellen aufweist, deren jeweiliger Lichtstrahl einen vorgegeben Strahlengang entlang einer optischen Achse geführt ist und einer Empfangseinheit, die aus einer Vielzahl von Sensoren gebildet ist, die jeweils einer Lichtquelle zugeordnet sind und einer Steuer- und Auswerteeinheit. Das Verfahren umfasst folgende Verfahrensschritte,
- Aussenden von mindestens einem vereinzelten Lichtstrahl durch eine oder mehrere der Lichtquellen
- Erfassen des jeweils vereinzelten Lichtstrahls durch mindestens einen Sensor der Empfangseinheit
- Ermitteln einer Ist-Position des erfassten Lichtstrahls an der Empfangseinheit anhand der Lichtstrahlverteilung an mehreren benachbarten Sensoren
- Bestimmen der Ausrichtgüte des Lichtgitters auf der Grundlage der durch die optische Achse des jeweiligen Lichtstrahls vorgegeben Soll-Position auf der Empfangseinheit und der ermittelten Ist-Position des Lichtstrahls. In der Steuer- und Auswerteeinheit messen die von einem Lichtstrahl beleuchteten Sensoren und bestimmt anhand der Impulsbreite des Signals des jeweiligen Sensors die Intensität.

Die DE 101 17 838 A1 betrifft ein Verfahren zur Störlichtunterdrückung bei optischen Messgeräten mit einem Lichtsender und einem Lichtempfänger, wobei das vom Lichtsender gesendete Lichtsignal Lichtimpulse aufweist, die Lichtimpulse in voneinander beabstandeten Impulspaketen angeordnet sind und innerhalb eines Impulspakets mit einer Trägerfrequenz aufeinander erfolgen. Im Lichtempfänger erfolgt unmittelbar nach dem Empfangen des Lichtsignals und Umsetzen des Lichtsignals in ein elektrisches Signal eine Bandpassfilterung des elektrischen Signals im Bereich der Trägerfrequenz.

Die EP 0 598 630 A1 offenbart eine Lichtschrankenanordnung mit Anzeigemitteln, die mehrere Anzeigeelemente aufweisen, wobei mit den Anzeigeelementen die Ausrichtgüte unterschiedlicher Empfänger angezeigt wird. Das Anzeigeelement ist dem oder den Empfängern, deren Ausrichtgüte es anzeigt, räumlich zugeordnet. Die Anzeigeelemente werden mittels einer Schiebekette adressiert und gesteuert.

Die DE 44 23 264 A1 betrifft eine optoelektronische Vorrichtung zum Übertragen von in Form von Bitfolgen vorliegenden Datenworten mit einem einen Sendelichtstrahl emittierenden Sender und einem Empfänger, wobei die Bitfolgen dem Sendelichtstrahl in Form einer Kodierung aufgeprägt sind. Innerhalb von Sendepausen, in denen keine Datenworte übertragen werden, werden innerhalb vorgegebener Zeitintervalle Überwachungs-Sendelichtimpulse mit einer von den Datenworten verschiedenen, als Pulsfolge ausgebildeten Kodierung so ausgesandt, dass die mittlere Sendeleistung einen vorgegebenen Schwellwert nicht überschreitet. Bei Nichterkennung einer Anzahl von Überwachungs-Sendelichtimpulsen im Empfänger wird die Sendeleistung des Senders reduziert.

Der Erfindung liegt die Aufgabe zugrunde, eine einfache, sichere und kostengünstige Justagemöglichkeit für eine Lichtschrankenanordnung der eingangs genannten Art bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung mit einer wenigstens einen Lichtimpulse emittierenden Sender aufweisenden Sendereinheit, einer wenigstens einen Empfänger aufweisenden Empfängereinheit und einer Ausrichteeinheit zur Ausrichtung der Sendereinheit und Empfängereinheit. In der Ausrichteeinheit werden als Ausrichtkriterium die Pulsbreiten der am Empfänger registrierten Lichtimpulse bestimmt. Die an einem Empfänger registrierten Lichtimpulse werden einem Tiefpass zugeführt und dann mit einer Triggerschwelle bewertet.

Bei der erfindungsgemäßen Lichtschrankenanordnung ist die Ausrichteeinheit dazu ausgebildet, die Pulsbreiten von Lichtimpulsen, die von den Sendern emittiert werden und von den zugeordneten Empfängern empfangen werden können, zu bestimmen.

Die EP 2 584 703 A1 betrifft einen photoelektrischen Schalter, umfassend einen Sender gemäß einem spezifischen Lichtprojektionsmuster aus einer Vielzahl von Lichtprojektionsmustern mit voneinander verschiedenen projizierten Lichtperioden und projizierten Lichtimpulsbreiten, um mit jeder anwendbaren projizierten Lichtperiode eine Lichtprojektion der anwendbaren Impulsbreite hin zu einem Detektionsbereich durchzuführen; einen Detektor, der Licht aus dem Detektionsbereich detektiert, um einen detektierten Lichtimpuls zu erzeugen; und einen Impulsbreitenwertungsabschnitt der bewertet, ob eine Impulsbreite des detektierten Lichtimpulses, die vom Detektor erzeugt wird, im Wesentlichen identisch mit der spezifischen projizierten Lichtpulsbreite des Lichtprojektionsmusters ist oder nicht, um zu bestimmen, wenn sie im Wesentlichen identisch ist, dass Licht, das vom Detektor detektiert wird, lokal emittiertes Licht ist, das vom Sender projiziert wird, dadurch gekennzeichnet, dass der photoelektrische Schalter weiter einen Bewertungsabschnitt umfasst, der angeordnet ist, um, wenn ein lokal emittiertes Licht durch den Impulsbreiten-Bewertungsabschnitt identifiziert wurde, eine vorgeschriebene Anzahl zu einem Zählwert zu addieren, und, wenn keine folgende Identifizierung eines lokal emittierten Lichts während eines Intervalls von dem Zeitpunkt dieser Bewertung bis die projizierte Lichtperiode des spezifischen Lichtprojektionsmusters abgelaufen ist, vorliegt, einen vorgeschriebenen Wert vom Zählwert zu subtrahieren, um basierend auf dem Zählwert zu bewerten, ob ein Detektionsobjekt in einem Detektionsbereich vorliegt.

Die EP 3 059 616 A1 betrifft einen optischen Sensor zur Erfassung von Objekten in einem Überwachungsbereich und umfasst wenigstens einen Lichtstrahlen emittierenden Sender und wenigstens einem Lichtstrahlen empfangenden Empfänger. Der Sender und der Empfänger sind so angeordnet, dass bei freiem Überwachungsbereich die Lichtstrahlen des Senders ungehindert auf den Empfänger treffen und bei einem Objekteingriff im Überwachungsbereich die Lichtstrahlen auf das Objekt treffen und nicht oder nur unvollständig zum Empfänger gelangen. Eine Auswerteeinheit ist vorgesehen, in welcher in Abhängigkeit von am Ausgang des Empfängers anstehenden Empfangssignalen ein binäres Schaltsignal generiert wird, dessen Schaltzustände angeben, ob sich ein Objekt im Überwachungsbereich befindet oder nicht. Testmittel sind vorgesehen, mittels derer der Sender derart betrieben ist, dass er ein Testsignal emittiert. Bei freiem Überwachungsbereich wird das empfangene Testsignal in ein digitales Ausgangssignal gewandelt und dieses mit einem in den Testmitteln gespeicherten digitalen Sollsignal für eine Fehlerkontrolle des optischen Sensors verglichen.

Erfindungsgemäß werden die Pulsbreiten als Ausrichtkriterium für die Ausrichtung der Sendereinheit relativ zur Empfängereinheit ausgenutzt. Bei einer unzureichenden Ausrichtung trifft nur ein kleiner Teil eines Lichtimpulses auf den zugeordneten Empfänger. Der Empfänger mit den vorgeordneten Bauelementen wie Verstärkern wird dann nicht in der Sättigung sondern im linearen Bereich betrieben, sodass sich eine kleine Pulsbreite der empfangenden Lichtimpulse ergibt. Je besser die Ausrichtung der Sendereinheit relativ zur Empfängereinheit desto größer ist die auf den Empfänger auftreffende Lichtmenge der Lichtimpulse. Je größer diese Lichtmenge ist, umso mehr wird der Empfänger in der Sättigung betrieben und umso größer ist die Pulsbreite. Damit liefert die Pulsbreite ein zuverlässiges Maß für die Ausrichtgüte der Sendereinheit relativ zur Empfängereinheit.

Die erfindungsgemäße Lichtschrankenanordnung kann generell von einer einzelnen Lichtschranke, einer Mehrfachanordnung von Lichtschranken oder auch von einem Lichtvorhang gebildet sein.

Ein wesentlicher Vorteil der Erfindung besteht darin, dass bei der Ausrichteeinheit zur Bestimmung der Pulsbreiten den Lichtimpulsen, die von dem oder den Sendern der Lichtschrankenanordnung emittiert und an dem oder den Empfängern der Empfängereinheit registriert werden, Komponenten genutzt werden können, die auch zur Signalauswertung zur Generierung von Objektfeststellungssignalen genutzt werden können. Dadurch ergibt sich ein besonders einfacher und kostengünstiger Aufbau der Ausrichteeinheit.

Die Lichtschrankenanordnung weist generell eine Auswerteeinheit auf, in der abhängig von Empfangssignalen ein Objektfeststellungssignal generiert wird. Das Objektfeststellungssignal ist vorzugsweise als binäres Schaltsignal ausgebildet, dessen Schaltzustände angeben, ob sich ein Objekt im Überwachungsbereich befindet oder nicht. Im einfachsten Fall weist die Auswerteeinheit eine Rechnereinheit auf, die von einem Controller oder dergleichen gebildet ist. Für den Fall, dass die Lichtschrankenanordnung ein Sicherheitssensor ist, der für den Einsatz im Bereich der Sicherheitstechnik einen fehlersicheren Aufbau aufweist, kann die Auswerteeinheit einen redundanten Aufbau mit zwei sich gegenseitig zyklisch überwachenden Rechnereinheiten aufweisen.

In der Auswerteeinheit sind eine oder mehrere Zeitmesseinheiten integriert, die zur Messung der Pulsbreite genutzt werden können.

Hierzu müssen die empfangenen Lichtimpulse jedoch zunächst digitalisiert werden.

Prinzipiell könnten die an einem Empfänger registrierten Lichtimpulse mit einer Triggerschwelle bewertet werden.

Erfindungsgemäß werden die an einem Empfänger registrierten Lichtimpulse einem Tiefpass zugeführt und dann mit einer Triggerschwelle bewertet.

Mit dem Tiefpass werden die Lichtimpulse verbreitert und gefiltert, sodass mit diesen ein noch aussagefähigeres Ausrichtkriterium gewonnen wird.

Mit der Triggerschwelle werden binäre Signale generiert, die einer Zeitmesseinheit zur Bestimmung von Pulsbreiten zugeführt werden.

Bei den generierten binären Signalfolgen entspricht der Signalzustand oberhalb der Triggerschwelle einem vorhandenen Lichtimpuls.

Gemäß einer weiteren Ausgestaltung werden die an einem Empfänger registrierten Lichtimpulse einem Analog-Digital-Wandler zugeführt.

In diesem Fall werden die in dem Analog-Digital-Wandler digitalisierten Signale einer Zeitmesseinheit zur Bestimmung von Pulsbreiten zugeführt.

Der analoge Lichtimpuls wird damit in ein digitalisiertes Signal mit einer durch die Auflösung des Analog-Digital-Wandlers entsprechenden Anzahl von Bits gewandelt.

Die Komponenten zur Generierung der digitalisierten Signalfolgen aus den analogen können vorteilhaft Bestandteil der Auswerteeinheit sein.

Besonders vorteilhaft wird in der Ausrichteeinheit anhand des Ausrichtkriteriums eine Ausrichtgüte für den oder mehrere Empfänger ermittelt.

Die Ausrichtgüte ist dabei umso höher, je größer die Pulsbreiten sind, die an dem oder den Empfängern registriert werden.

Gemäß einer vorteilhaften Ausgestaltung sind an der Empfängereinheit Anzeigemittel zur Anzeige der Ausrichtgüte vorgesehen.

Die ermittelte Ausrichtgüte wird somit an der Empfängereinheit visualisiert, sodass anhand dieser Anzeige ein Benutzer die Empfängereinheit relativ zur Sendereinheit ausrichten kann.

Vorteilhaft weisen die Anzeigemittel wenigstens ein optisches Anzeigeelement auf.

Insbesondere emittiert das Anzeigeelement Blinksequenzen von sichtbaren optischen Pulsen.

Das Anzeigeelement kann im einfachsten Fall von einer Leuchtdiode gebildet sein, die sichtbares Licht emittiert.

Vorteilhaft ist die Ausrichtgüte in der Frequenz, dem Puls-/Pausenverhältnis, der Anzahl von Pulsen in vorgegebenen Pulsgruppen, der Pulsdauern oder der Pausen zwischen Pulsen die von dem Anzeigeelement emittierten sichtbaren Lichtpulse codiert.

Anhand der Variation der jeweiligen Kenngröße kann ein Benutzer genau ablesen, wie gut die Sendereinheit und die Empfängereinheit zueinander ausgerichtet sind. Verändert der Benutzer die Relativposition der Sendereinheit und Empfängereinheit kontinuierlich, verändert sich auch die Kenngröße des abgestrahlten Lichts des Anzeigeelements, sodass der Benutzer genau erkennen kann, ob sich durch die vorgenommene Positionsänderung die Ausrichtung der Empfängereinheit relativ zur Sendereinheit verbessert oder verschlechtert.

Für den Fall, dass die Lichtschrankenanordnung jeweils mehrere Sender und Empfänger aufweist, wobei dann die Lichtschrankenanordnung insbesondere von einem Lichtvorhang gebildet sein kann, ist es besonders vorteilhaft, wenn die Anzeigemittel mehrere Anzeigeelemente aufweisen, wobei mit den Anzeigeelementen die Ausrichtgüte unterschiedlicher Empfänger angezeigt wird.

Insbesondere ist das Anzeigeelement dem oder den Empfängern, deren Ausrichtgüte es anzeigt, räumlich zugeordnet.

Durch diese ortsaufgelöste Anzeige können auch Verkippungen oder Verdrehen der Sendereinheit und der Empfängereinheit erfasst und angezeigt werden, wodurch eine weitere verbesserte Justage ermöglicht wird.

Insbesondere bei einer als Lichtvorhang ausgebildeten Lichtschrankenanordnung bilden die Sender und die dieser zugeordneten Empfänger Sender-Empfänger-Paare, die zyklisch einzeln nacheinander aktiviert werden, wobei die Sender-Empfänger-Synchronisierung in bekannter Weise über die Lichtimpulse auf optischem Weg erfolgt.

Zweckmäßig ist zur Einzelaktivierung der Empfänger in der Auswerteeinheit eine Schiebekette vorgesehen.

Besonders vorteilhaft wird diese Schiebekette auch zur Ansteuerung der Anzeigeelemente verwendet, wodurch sich ein besonders einfacher Schaltungsaufbau ergibt.

Vorteilhaft ist jedem Anzeigeelement ein Anzeigespeicherelement zugeordnet, welches mit der Schiebekette ansteuerbar ist.

Dabei sind Blinksequenzen eines Anzeigeelements durch in dem zugeordneten Anzeigespeicherelement gespeicherte Informationen oder über separate Zuleitungen vorgegeben.

Gemäß einer alternativen Variante der Erfindung betrifft die Lichtschrankenanordnung eine Sendereinheit, welche eine Anordnung von Lichtimpulsen emittierenden Sendern aufweist, eine Empfängereinheit, welche eine Anordnung von Empfängern aufweist und eine Ausrichteeinheit zur Ausrichtung der Sendereinheit und Empfängereinheit. In der Ausrichteeinheit wird als Ausrichtkriterium die Anzahl von Empfängern ausgewertet, welche von den ihnen zugeordneten Sendern Lichtimpulse empfangen.

Die Erfindung wird im Folgenden anhand der Zeichnungen erläutert. Es zeigen:
- Figur 1:: Ausführungsbeispiel der erfindungsgemäßen Lichtschrankenanordnung in Form eines Lichtvorhangs.
- Figur 2:: Schaltungsanordnung einer Ausrichteeinheit für den Lichtvorhang gemäß Figur 1.
- Figur 3:: Schaltungsanordnung zur Anordnung von Empfängern und Anzeigeelementen für den Lichtvorhang gemäß Figur 1.
- Figur 4a, 4b:: Unterschiedliche Varianten der Anordnung von Anzeigeelementen an einer Empfängereinheit des Lichtvorhangs gemäß Figur 1.
- Figur 5a, 5b:: Erstes Beispiel von Blinksequenzen eines Anzeigeelements gemäß den Figuren 3, 4a, 4b.
- Figur 6a, 6b, 6c:: Zweites Beispiel von Blinksequenzen eines Anzeigeelements gemäß den Figuren 3, 4a, 4b.
- Figur 7a - 7f:: Drittes Beispiel von Blinksequenzen eines Anzeigeelements gemäß den Figuren 3, 4a, 4b.
- Figur 8a - 8e:: Viertes Beispiel von Blinksequenzen eines Anzeigeelements gemäß den Figuren 3, 4a, 4b.

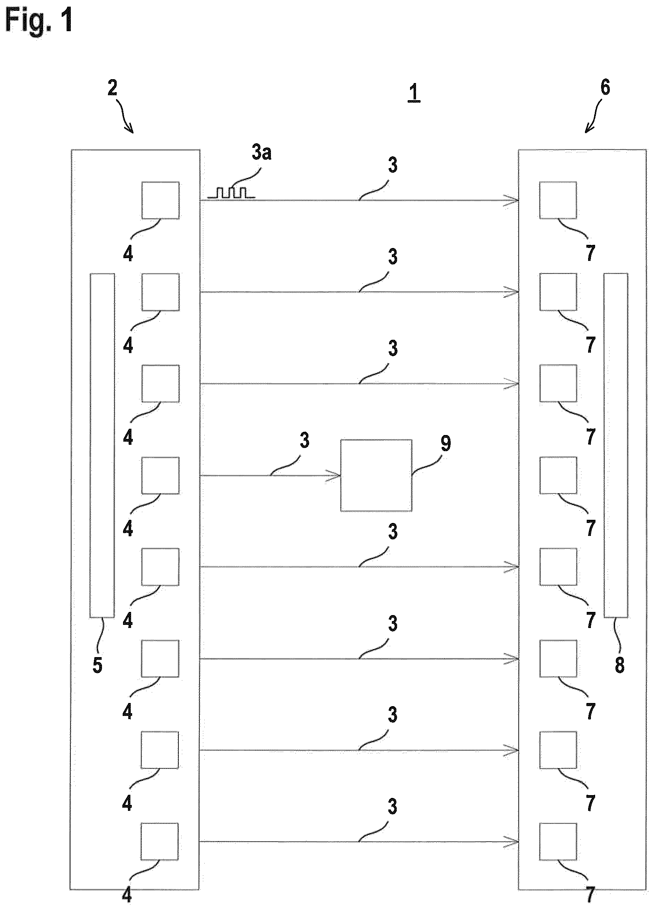

Figur 1 zeigt schematisch ein Ausführungsbeispiel der erfindungsgemäßen Lichtschrankenanordnung in Form eines Lichtvorhangs 1.

Der Lichtvorhang 1 dient zur Objekterfassung in einem Überwachungsbereich. Der Lichtvorhang 1 weist eine Sendereinheit 2 mit einem Gehäuse auf, in welchem eine Reihenanordnung von Sendelichtstrahlen 3 emittierenden Sendern 4 vorgesehen ist. Die Sender 4, die von Leuchtdioden oder dergleichen gebildet sind, emittieren Sendelichtstrahlen 3 in Form von Lichtimpulsen 3a im Infrarotbereich, wie für den ersten Sender 4 in Figur 1 schematisch dargestellt. Die Sender 4 werden von einer Sendersteuerung 5 gesteuert.

Der Lichtvorhang 1 weist weiterhin eine Empfängereinheit 6 auf, in deren Gehäuse eine Reihenanordnung von Empfängern 7 in Form von Fotodioden oder dergleichen sowie eine Auswerteeinheit 8 integriert ist.

Die Sendereinheit 2 und die Empfängereinheit 6 sind an gegenüberliegenden Rändern des Überwachungsbereichs so angeordnet, dass bei freiem Überwachungsbereich die Sendelichtstrahlen 3 eines Senders 4 auf den zugeordneten gegenüberliegenden Empfänger 7 treffen, wie in Figur 1 dargestellt. Jeder Sender 4 bildet mit dem zugeordneten Empfänger 7 ein Sender-Empfänger-Paar.

Die Sender-Empfänger-Paare werden in bekannter Weise über eine optische Synchronisierung zyklisch einzeln nacheinander aktiviert. Im vorliegenden Fall sind acht Sender-Empfänger-Paare vorgesehen. Natürlich kann ein Lichtvorhang 1 auch eine andere Anzahl von Sender-Empfänger-Paaren aufweisen.

Objekte 9 im Überwachungsbereich werden dadurch erfasst, dass der Strahlengang der Sendelichtstrahlen 3 wenigstens eines Sender-Empfänger-Paars unterbrochen wird, wie in Figur 1 dargestellt.

In der Auswerteeinheit 8 wird in Abhängigkeit der Empfangssignale ein Objektfeststellungssignal generiert, das über einen Ausgang an eine externe Einheit ausgegeben wird. Im vorliegenden Fall ist das Objektfeststellungssignal als binäres Schaltsignal generiert, dessen Schaltzustände angeben, ob sich ein Objekt 9 im Überwachungsbereich befindet oder nicht.

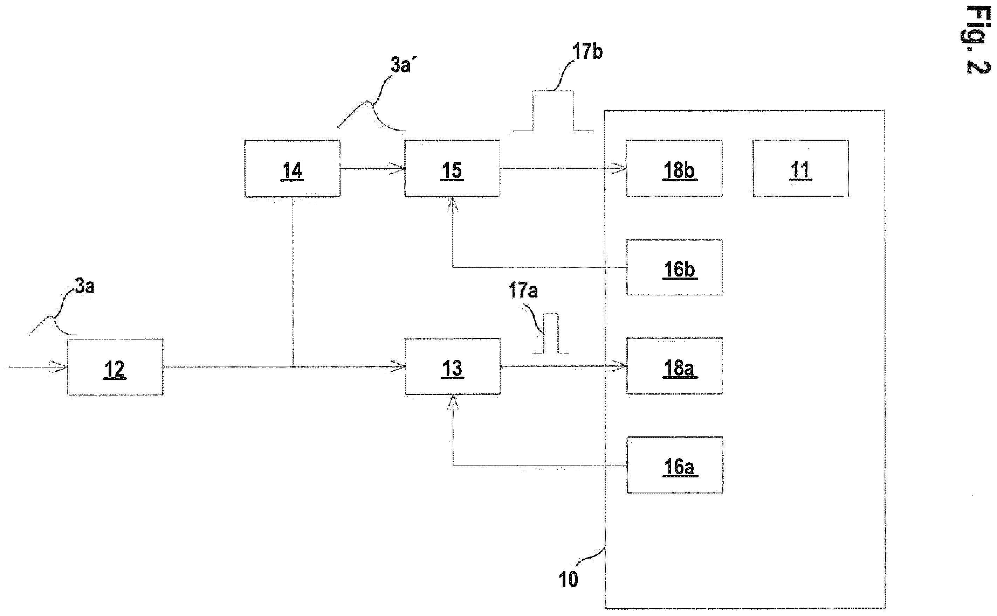

Figur 2 zeigt eine Rechnereinheit in Form eines Controllers 10, als Bestandteil der Auswerteeinheit 8 des Lichtvorhangs 1. Der Controller 10 weist eine CPU 11 auf, die die einzelnen Komponenten des Controllers 10 steuert. Der Controller 10 ist Bestandteil einer Ausrichteeinheit, die zur Ausrichtung der Sendereinheit 2 relativ zur Empfängereinheit 6 dient.

Erfindungsgemäß werden in der Ausrichteeinheit die Pulsbreiten der in den Empfängern 7 registrierten Lichtimpulsen 3a als Ausrichtkriterium für die Ausrichtung ermittelt.

Die Figur 2 zeigt einen Verstärker 12, in welchem ein an einem Empfänger 7 registrierten Lichtimpuls 3a verstärkt wird. Generell kann für jeden Empfänger 7 ein Verstärker 12 zugeordnet sein. Alternativ ist ein Verstärker 12 vorhanden, dem im Multiplexbetrieb die Empfangssignale aller Empfänger 7 zugeführt ist.

Das am Ausgang des Verstärkers 12 anstehende Signal 17a, 17b wird einerseits direkt einem ersten Komparator 13 zugeführt und andererseits über einen Tiefpass 14 einem zweiten Komparator 15 zugeführt. Wie in Figur 2 schematisch dargestellt, wird der Lichtimpuls 3a` durch die Tiefpass-Filterung verbreitert.

Mittels eines ersten Analog-Digital-Wandlers 16a wird eine einstellbare Triggerschwelle für den ersten Komparator 13 vorgesehen. Mit einem zweiten Analog-Digital-Wandler 16b wird eine einstellbare Triggerschwelle für den zweiten Komparator 15 vorgegeben. Alternativ können auch feste Triggerschwellen vorgegeben werden.

Durch die Triggerschwelle wird aus den analogen Lichtimpulsen 3a, 3a` eine Folge von binären Signalen 17a, 17b generiert. Der "high" Zustand eines binären Signals 17a, 17b entspricht einem Vorhandensein eines Lichtimpulses 3a, 3a`.

Diese Signale 17a, 17b werden über einen Timereingang 18a, 18b oder einen Digitaleingang dem Controller 10 zugeführt. Im Controller 10, insbesondere in der CPU 11, ist eine Zeitmesseinheit integriert, anhand derer die Zeitintervalle der "high" Zustände der digitalen Signale 17a, 17b und damit der Pulsbreite der Lichtimpulse 3a gemessen werden.

Im vorliegenden Fall erfolgt eine zweikanalige Bestimmung der Pulsbreite, indem in der Zeitmesseinheit die digitalen Signale 17a, 17b beider Komparatoren 13, 15 ausgewertet werden. Generell ist es auch möglich nur die Signale 17a, 17b eines Komparators 13, 15 auszuwerten.

Die Pulsbreiten der Lichtimpulse 3a der Empfänger 7 werden als Ausrichtkriterium in der Ausrichteeinheit ausgewertet. Dabei wird aus den Pulsbreiten die Ausrichtgüte bestimmt, die umso höher ist, desto größer die Pulsbreiten sind.

Prinzipiell können nur die Lichtimpulse 3a eines Empfängers 7 oder einer Teilmenge der Empfänger 7 ausgewertet werden. Im vorliegenden Fall werden für alle Empfänger 7 die Pulsbreiten zur Ermittlung der Ausrichtgüte bestimmt.

Die ermittelte Ausrichtgüte wird über Anzeigeelemente 19a -19f angezeigt. Die Anzeigeelemente 19a -19f bilden Anzeigemittel, die sichtbares Licht emittieren. Im einfachsten Fall sind die Anzeigeelemente 19a - 19f von Leuchtdioden gebildet, die sichtbares Licht emittieren.

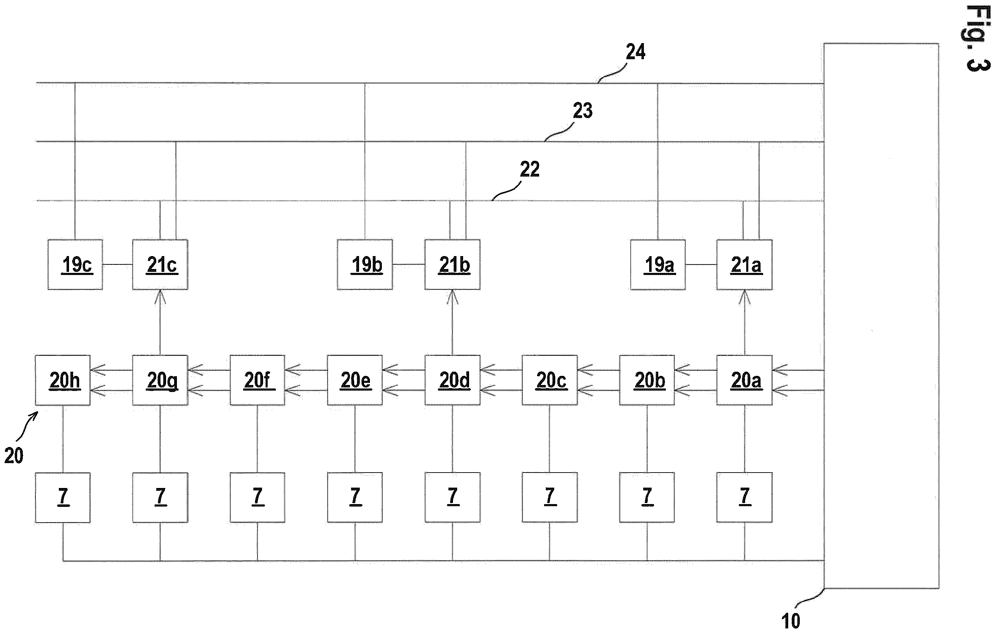

Figur 3 zeigt die Ansteuerung der Empfänger 7 und der Anzeigeelemente 19a, 19b, 19c über den Controller 10. Im vorliegenden Fall sind drei Anzeigeelemente 19a, 19b, 19c vorgesehen.

Zur Ansteuerung der acht Empfänger 7 ist eine Schiebekette 20 mit acht Schiebeketteelementen 20a - 20h vorgesehen, die zum Beispiel von Flipflops gebildet sind. Durch die Steuerung des Controllers 10 wird ein Bitwert zum Beispiel eine "1" durch die Schiebeketteelemente 20a - 20h durchgeschoben, wodurch die Empfänger 7 einzeln nacheinander aktiviert werden.

Diese Schiebekette 20 wird auch zur Steuerung der Anzeigeelemente 19a, 19b, 19c verwendet. Jedem Anzeigeelement 19a, 19b, 19c ist ein Anzeigespeicherelement 21a, 21b, 21c zugeordnet, das von einem Flipflop gebildet ist. Durch Steuerleitungen 22, 23, 24 erfolgt über den Controller 10 die Steuerung und Adressierung derart, dass dann wenn über das Schiebeketteelement 20a das erste Anzeigespeicherelement 21a, über das Schiebeketteelement 20d das zweite Anzeigespeicherelement 21b und über das Schiebeketteelement 20g das dritte Anzeigespeicherelement 21c aktiviert wird.

In den Anzeigespeicherelementen 21a, 21b, 21c sind zudem Informationen gespeichert, in welcher Weise bei Aktivierung des jeweiligen Anzeigespeicherelements 21a, 21b, 21c das zugeordnete Anzeigeelement 19a, 19b, 19c sichtbares Licht mit einer bestimmten Blinksequenz emittiert, wobei die jeweilige Blinksequenz die aktuelle Ausrichtgüte signalisiert.

In einer alternativen Ausgestaltung kann der Informationswechsel der Anzeigeelemente 19a, 19b, 19c auch über eine der Steuerleitungen 22, 23, 24 durchgeführt werden.

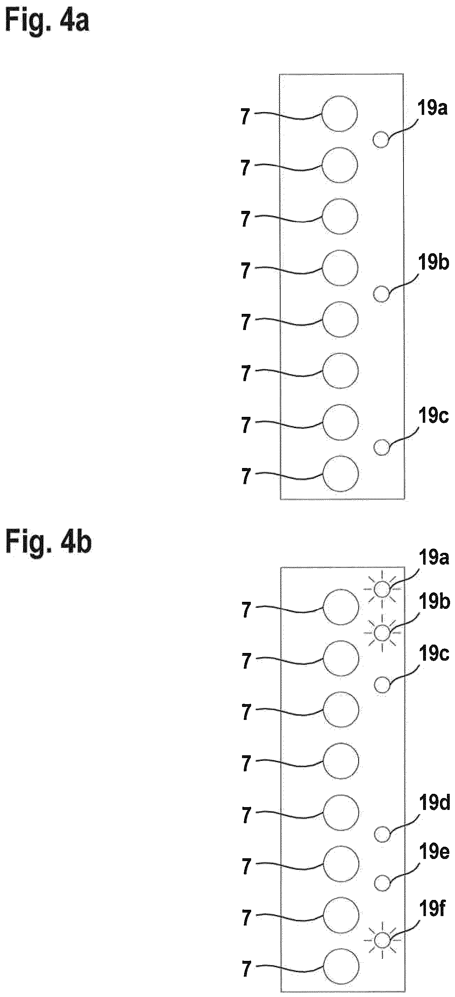

Figur 4a zeigt die Anordnung der Anzeigeelemente 19a - 19c an der Frontseite der Empfängereinheit 6 mit den dort hinter einer Scheibe liegenden Empfängern 7.

Wie aus 4a ersichtlich, ist das erste Anzeigeelement 19a den beiden oberen Empfängern 7 zugeordnet und zeigt die aktuelle in der Ausrichteeinheit ermittelte Ausrichtgüte für diese beiden Empfänger 7 an. Entsprechend zeigt das Anzeigeelement 19b, das den mittleren Empfängern 7 zugeordnet ist, die aktuelle Ausrichtgüte für diese beiden Empfänger 7 an. Schließlich ist das dritte Anzeigeelement 19c den beiden unteren Empfängern 7 zugeordnet und zeigt für diese die in der Ausrichteeinheit ermittelte Ausrichtgüte an.

Generell sind auch andere Anordnungen von Anzeigeelementen 19a - 19f an der Empfängereinheit 6 möglich. So zeigt Figur 4b eine Anordnung mit Anzeigeelementen 19a - 19c zur Anzeige der Ausrichtgüte der Empfänger 7 im oberen Bereich des Lichtvorhangs 1 und eine Anordnung mit Anzeigeelementen 19d - 19f zur Anzeige der Ausrichtgüte der Empfänger 7 im unteren Bereich des Lichtvorhangs 1.

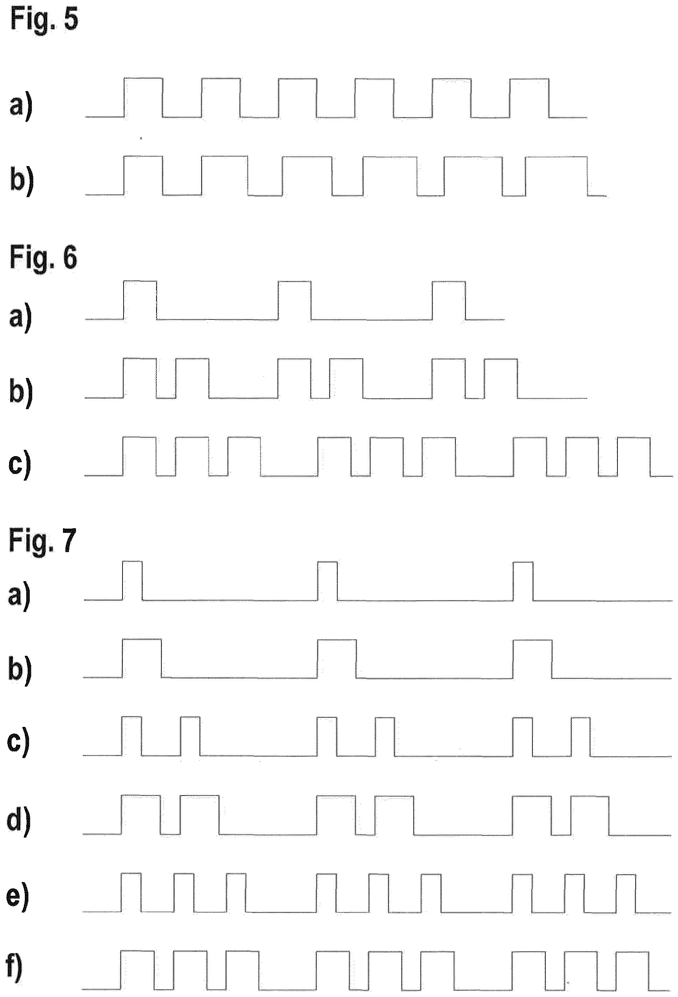

Die Figuren 5a, 5b zeigen ein erstes Beispiel von unterschiedlichen Blinksequenzen eines Anzeigeelements 19a - 19f. In diesem Fall wird das Puls-/Pausenverhältnis von sichtbaren Anzeigelichtpulsen des Anzeigeelements 19a - 19f variiert, um unterschiedliche Ausrichtgüte anzuzeigen.

Die Figuren 6a, 6b, 6c zeigen ein weiteres Beispiel von unterschiedlichen Blinksequenzen eines Anzeigeelements 19a - 19f zur Anzeige unterschiedlicher Ausrichtgüten. Je nach Ausrichtgüte emittiert das Anzeigeelement 19a - 19f sichtbares Licht in Form von Pulsgruppen mit unterschiedlichen Anzahlen einzelner Anzeigelichtpulse. Beispielsweise kann mit der Aussendung von Pulsgruppen gemäß Figur 6a eine geringe Ausrichtgüte, mit der Aussendung von Pulsgruppen gemäß Figur 6b eine mittlere Ausrichtgüte und mit der Aussendung von Pulsgruppen gemäß Figur 6c eine hohe Ausrichtgüte von Anzeigeelementen 19a - 19f angezeigt werden.

Die Figuren 7a - 7f zeigen ein weiteres Beispiel von unterschiedlichen Blinksequenzen eines Anzeigeelements 19a - 19f zur Anzeige unterschiedlicher Ausrichtgüte. Bei dieser Ausführungsform wird nicht nur die Anzahl von Anzeigelichtpulsen innerhalb einer Pulsgruppe, wie bei der Ausführungsform gemäß den Figuren 6a - 6c sondern zusätzlich auch deren Puls-/Pausenverhältnis geändert. Dabei wird mit den Anzeigelichtpulsen ausgehend von Figur 7a bis Figur 7f eine kontinuierlich bessere Ausrichtgüte angezeigt.

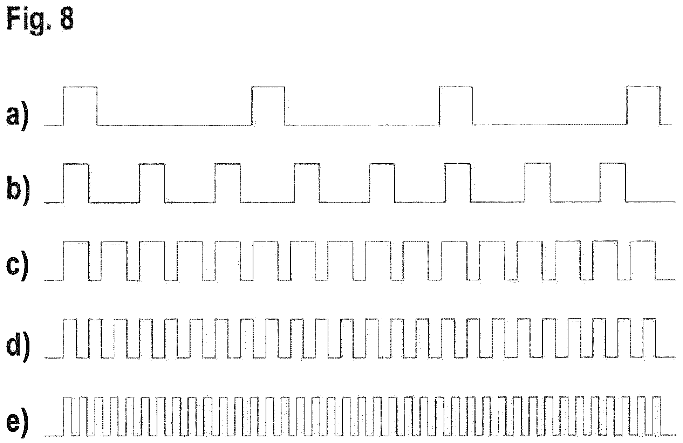

Die Figuren 8a - 8e zeigen ein weiteres Beispiel von unterschiedlichen Blinksequenzen eines Anzeigeelements 19a - 19f zur Anzeige unterschiedlicher Ausrichtgüte. Bei dieser Ausführungsform werden die Pulsfolgefrequenzen und Pulsdauern der einzelnen Anzeigelichtpulse variiert. Dabei wird mit den Anzeigelichtpulsen ausgehend von Figur 8a bis Figur 8e eine kontinuierliche bessere Ausrichtgüte mittels des Anzeigeelements 19a - 19f angezeigt.

### Bezugszeichenliste

- (1): Lichtvorhang
- (2): Sendereinheit
- (3): Sendelichtstrahl
- (3a, 3a`): Lichtimpuls
- (4): Sender
- (5): Sendersteuerung
- (6): Empfängereinheit
- (7): Empfänger
- (8): Auswerteeinheit
- (9): Objekt
- (10): Controller
- (11): CPU
- (12): Verstärker
- (13): Komparator, erster
- (14): Tiefpass
- (15): Komparator, zweiter
- (16a): Analog-Digital-Wandler, erster
- (16b): Analog-Digital-Wandler, zweiter
- (17a, b): Signal
- (18a, b): Timereingang
- (19a - 19f): Anzeigeelement
- (20): Schiebekette
- (20a - 20h): Schiebeketteelement
- (21a, b, c): Anzeigespeicherelement
- (22): Steuerleitung
- (23): Steuerleitung
- (24): Steuerleitung

## Patentansprüche

1. Lichtschrankenanordnung mit einer wenigstens einen Lichtimpulse (3a) emittierenden Sender (4) aufweisenden Sendereinheit (2), mit einer wenigstens einen Empfänger (7) aufweisenden Empfängereinheit (6) und mit einer Ausrichteeinheit zur Ausrichtung der Sendereinheit (2) und Empfängereinheit (6), wobei dass in der Ausrichteeinheit als Ausrichtkriterium die Pulsbreiten der am Empfänger (7) registrierten Lichtimpulse (3a) bestimmt werden, **dadurch gekennzeichnet, dass** die an einem Empfänger (7) registrierten Lichtimpulse (3a) einem Tiefpass (14) zugeführt und dann mit einer Triggerschwelle bewertet werden.

2. Lichtschrankenanordnung nach Anspruch 1, **dadurch gekennzeichnet, dass** in der Ausrichteeinheit als Ausrichtkriterium die Anzahl von Empfängern (7) ausgewertet wird, welche von den ihnen zugeordneten Sendern (4) Lichtimpulse (3a) empfangen.

3. Lichtschrankenanordnung nach einem der Ansprüche 1 oder 2, **dadurch gekennzeichnet, dass** mit der Triggerschwelle binäre Signale (17a, 17b) generiert werden, die einer Zeitmesseinheit zur Bestimmung von Pulsbreiten zugeführt werden.

4. Lichtschrankenanordnung nach einem der Ansprüche 1 bis 3, **dadurch gekennzeichnet, dass** die an einem Empfänger (7) registrierten Lichtimpulse (3a) einem Analog-Digital-Wandler (16a, 16b) zugeführt werden.

5. Lichtschrankenanordnung nach Anspruch 4, **dadurch gekennzeichnet, dass** die in dem Analog-Digital-Wandler (16a, 16b) digitalisierten Signale (17a, 17b) einer Zeitmesseinheit zur Bestimmung von Pulsbreiten zugeführt werden.

6. Lichtschrankenanordnung nach einem der Ansprüche 3 bis 5, **dadurch gekennzeichnet, dass** die Zeitmesseinheit in einer Rechnereinheit integriert ist, welche Bestandteil der Ausrichteeinheit ist.

7. Lichtschrankenanordnung nach Anspruch 6, **dadurch gekennzeichnet, dass** die Rechnereinheit Bestandteil einer Auswerteeinheit (8) ist, in welcher in Abhängigkeit von Empfangssignalen des oder der Empfänger (7) ein Objektfeststellungssignal generiert wird.

8. Lichtschrankenanordnung nach einem der Ansprüche 1 bis 7, **dadurch gekennzeichnet, dass** in der Ausrichteeinheit anhand des Ausrichtkriteriums eine Ausrichtgüte für den oder mehrere Empfänger (7) ermittelt wird, und dass an der Empfängereinheit (6) Anzeigemittel zur Anzeige der Ausrichtgüte vorgesehen sind.

9. Lichtschrankenanordnung nach Anspruch 8, **dadurch gekennzeichnet, dass** die Anzeigemittel wenigstens ein optisches Anzeigeelement (19a - 19f) aufweisen.

10. Lichtschrankenanordnung nach Anspruch 9, **dadurch gekennzeichnet, dass** das Anzeigeelement (19a - 19f) Blinksequenzen von sichtbaren optischen Pulsen emittiert, wobei die Ausrichtgüte in der Frequenz, dem Puls-/Pausenverhältnis, der Anzahl von Pulsen in vorgegebenen Pulsgruppen, der Pulsdauern oder der Pausen zwischen Pulsen der sichtbaren optischen Pulse codiert ist.

11. Lichtschrankenanordnung nach einem der Ansprüche 9 oder 10, **dadurch gekennzeichnet, dass** die Anzeigemittel mehrere Anzeigeelemente (19a - 19f) aufweisen, wobei mit den Anzeigeelementen (19a - 19f) die Ausrichtgüte unterschiedlicher Empfänger (7) angezeigt wird, wobei das Anzeigeelement (19a - 19f) dem oder den Empfängern (7), deren Ausrichtgüte es anzeigt, räumlich zugeordnet ist.

12. Lichtschrankenanordnung nach Anspruch 11, **dadurch gekennzeichnet, dass** die Anzeigeelemente (19a - 19f) mittels einer Schiebekette (20) adressiert und gesteuert werden.

13. Lichtschrankenanordnung nach Anspruch 12, **dadurch gekennzeichnet, dass** mittels der Schiebekette (20) eine Steuerung der Aktivierung der Empfänger (7) erfolgt.

14. Lichtschrankenanordnung nach einem der Ansprüche 12 oder 13, **dadurch gekennzeichnet, dass** jedem Anzeigeelement (19a - 19f) ein Anzeigespeicherelement (21a, 21b, 21c) zugeordnet ist, welches mit der Schiebekette (20) ansteuerbar ist, wobei Blinksequenzen eines Anzeigeelements (19a - 19f) durch in dem zugeordneten Anzeigespeicherelement (21a, 21b, 21c) gespeicherte Informationen oder über separate Zuleitungen vorgegeben sind.

15. Lichtschrankenanordnung nach einem der Ansprüche 1 bis 14, **dadurch gekennzeichnet, dass** diese als Lichtvorhang (1) ausgebildet ist, und/oder dass diese ein Sicherheitssensor ist.

## Claims

1. A light barrier device with a transmitter unit (2) having at least one transmitter (4) emitting light pulses (3a), with a receiver unit (6) having at least one receiver (7) and with an alignment unit for aligning the transmitter unit (2) and receiver unit (6), wherein the pulse widths of the light pulses (3a) registered at the receiver (7) are determined in the alignment unit as an alignment criterion, **characterised in that** the light pulses (3a) registered at a receiver (7) are fed to a low-pass filter (14) and then evaluated with a trigger threshold.

2. A light barrier device according to claim 1, **characterised in that** the number of receivers (7) which receive light pulses (3a) from the transmitters (4) assigned to them is evaluated as an alignment criterion in the alignment unit.

3. A light barrier device according to one of claims 1 or 2, **characterised in that** binary signals (17a, 17b) are generated with the trigger threshold, which are fed to a timing unit for determining pulse widths.

4. A light barrier device according to one of claims 1 to 3, **characterised in that** the light pulses (3a) registered at a receiver (7) are fed to an analogue-to-digital converter (16a, 16b).

5. A light barrier device according to claim 4, **characterised in that** the signals (17a, 17b) digitised by analogue-digital converters (16a, 16b) are fed to a timing unit for determining pulse widths.

6. A light barrier device according to one of claims 3 to 5, **characterised in that** the timing unit is integrated in a computer unit which is part of the alignment unit.

7. A light barrier device according to claim 6, **characterised in that** the computer unit is part of an evaluation unit (8) in which an object detection signal is generated as a function of received signals from the receiver or receivers (7).

8. A light barrier device according to one of claims 1 to 7, **characterised in that** an alignment quality for the one or more receivers (7) is determined in the alignment unit on the basis of the alignment criterion, and **in that** display means for displaying the alignment quality are provided on the receiver unit (6).

9. A light barrier device according to claim 8, **characterised in that** the display means comprise at least one optical display element (19a - 19f).

10. A light barrier device according to claim 9, **characterised in that** the display element (19a - 19f) emits flashing sequences of visible optical pulses, the alignment quality being coded in the frequency, the pulse/pause ratio, the number of pulses in predetermined pulse groups, the pulse durations or the pauses between pulses of the visible optical pulses.

11. A light barrier device according to one of claims 9 or 10, **characterised in that** the display means have a plurality of display elements (19a - 19f), the display elements (19a - 19f) being used to display the alignment quality of different receivers (7), the display element (19a - 19f) being spatially assigned to the receiver or receivers (7) whose alignment quality it displays.

12. A light barrier device according to claim 11, **characterised in that** the display elements (19a - 19f) are addressed and controlled by means of a sliding chain (20).

13. A light barrier device according to claim 12, **characterised in that** the activation of the receivers (7) is controlled by means of the sliding chain (20).

14. A light barrier device according to one of claims 12 or 13, **characterised in that** each display element (19a - 19f) is assigned a display memory element (21a, 21b, 21c) which can be actuated with the sliding chain (20), wherein flashing sequences of a display element (19a - 19f) are predetermined by information stored in the assigned display memory element (21a, 21b, 21c) or via separate supply lines.

15. A light barrier device according to one of claims 1 to 14, **characterised in that** it is designed as a light curtain (1) and/or that it is a safety sensor.

## Revendications

1. Agencement de barrières lumineuses avec une unité émettrice (2) ayant au moins un émetteur (4) émettant des impulsions lumineuses (3a), avec une unité réceptrice (6) ayant au moins un récepteur (7) et avec une unité d'alignement pour aligner l'unité émettrice (2) et l'unité réceptrice (6), dans lequel les largeurs d'impulsion des impulsions lumineuses (3a) enregistrées au niveau du récepteur (7) sont déterminées dans l'unité d'alignement en tant que critère d'alignement, **caractérisé par le fait que** les impulsions lumineuses (3a) enregistrées au niveau d'un récepteur (7) sont transmises à un filtre passe-bas (14), puis évaluées à l'aide d'un seuil de déclenchement.

2. Agencement de barrières lumineuses selon la revendication 1, **caractérisé par le fait que** le nombre de récepteurs (7) qui reçoivent des impulsions lumineuses (3a) des émetteurs (4) qui leur sont attribués est évalué comme critère d'alignement dans l'unité d'alignement.

3. Agencement de barrières lumineuses selon l'une des revendications 1 ou 2, **caractérisé par le fait que** des signaux binaires (17a, 17b) sont générés avec le seuil de déclenchement, qui sont transmis à une unité de synchronisation pour déterminer les largeurs d'impulsion.

4. Agencement de barrières lumineuses selon l'une des revendications 1 à 3, **caractérisé par le fait que** les impulsions lumineuses (3a) enregistrées au niveau d'un récepteur (7) sont transmises à un convertisseur analogique-numérique (16a, 16b).

5. Agencement de barrières lumineuses selon la revendication 4, **caractérisé par le fait que** les signaux (17a, 17b) numérisés par les convertisseurs analogiques-numériques (16a, 16b) sont transmis à une unité de synchronisation pour déterminer les largeurs d'impulsion.

6. Agencement de barrières lumineuses selon l'une des revendications 3 à 5, **caractérisé par le fait que** l'unité de temporisation est intégrée dans une unité informatique qui fait partie de l'unité d'alignement.

7. Agencement de barrières lumineuses selon la revendication 6, **caractérisé par le fait que** l'unité informatique fait partie d'une unité d'évaluation (8) dans laquelle un signal de détection d'objet est généré en fonction des signaux reçus du ou des récepteurs (7).

8. Agencement de barrières lumineuses selon l'une des revendications 1 à 7, **caractérisé par le fait qu'**une qualité d'alignement pour un ou plusieurs récepteurs (7) est déterminée dans l'unité d'alignement sur la base du critère d'alignement, et **par le fait que** des moyens d'affichage pour afficher la qualité d'alignement sont prévus sur l'unité réceptrice (6).

9. Agencement de barrières lumineuses selon la revendication 8, **caractérisé par le fait que** les moyens d'affichage comprennent au moins un élément d'affichage optique (19a - 19f).

10. Agencement de barrières lumineuses selon la revendication 9, **caractérisé par le fait que** l'élément d'affichage (19a - 19f) émet des séquences clignotantes d'impulsions optiques visibles, la qualité de l'alignement étant codée dans la fréquence, le rapport impulsion/ pause, le nombre d'impulsions dans des groupes d'impulsions prédéterminés, la durée des impulsions ou les pauses entre les impulsions des impulsions optiques visibles.

11. Agencement de barrières lumineuses selon l'une des revendications 9 ou 10, **caractérisé par le fait que** les moyens d'affichage comportent plusieurs éléments d'affichage (19a - 19f), les éléments d'affichage (19a - 19f) étant utilisés pour afficher la qualité d'alignement de différents récepteurs (7), l'élément d'affichage (19a - 19f) étant assigné spatia-lement au(x) récepteur(s) (7) dont il affiche la qualité d'alignement.

12. Agencement de barrières lumineuses selon la revendication 11, **caractérisé par le fait que** les éléments d'affichage (19a - 19f) sont adressés et contrôlés au moyen d'une chaîne coulissante (20).

13. Agencement de barrières lumineuses selon la revendication 12, **caractérisé par le fait que** l'activation des récepteurs (7) est commandée au moyen de la chaîne coulissante (20).

14. Agencement de barrières lumineuses selon l'une des revendications 12 ou 13, **caractérisé par le fait que** chaque élément d'affichage (19a - 19f) est associé à un élément de mémoire d'affichage (21a, 21b, 21c) qui peut être actionné par la chaîne coulissante (20), les séquences de clignotement d'un élément d'affichage (19a - 19f) étant prédéterminées par des informations stockées dans l'élément de mémoire d'affichage associé (21a, 21b, 21c) ou par des lignes d'alimentation séparées.

15. Agencement de barrières lumineuses selon l'une des revendications 1 à 14, **caractérisé par le fait qu'**il est conçu comme une barrière lumineuse (1) et/ou qu'il s'agit d'un capteur de sécurité.
